# EUROPEAN PATENT APPLICATION

(11) **EP 1 696 678 A1**
(43) Date of publication of application: **30.08.2006**
(21) Application number: 04793029.2
(22) Date of filing: 27.10.2004
(51) Int. Cl.: H04N 7/32

(54) **MOVING IMAGE REPRODUCING METHOD, APPARATUS AND PROGRAM**

(30) Priority: 18.12.2003 JP 2003420585
(71) Applicant: NEC CORPORATION, Minato-ku, Tokyo 108-8001 (JP)
(72) Inventor: OZAWA, Kazunori, c/o NEC Corporation, Tokyo 1088001 (JP)
(74) Representative: Betten & Resch
(86) International application number: PCT/JP2004/015917
(87) International publication number: WO 2005/062623

(57) **Abstract**

An apparatus and a method in which, even in case the transmitted speed on a transmission channel is low and hence it is not possible to provide a sufficient number of frames, a receiving side is able to restore a picture, which has not been received, with the use of a characteristic parameter, in such a manner that motion can be expressed sufficiently satisfactorily on the receiving side to improve the quality of a moving picture. The apparatus includes a decoder 200 for receiving a bitstream, obtained on compression/encoding of a moving picture, and for decoding a picture image from the bitstream; a characteristic parameter extractor 210 for extracting a characteristic parameter from a picture image restored, a moving picture reconstructor 212 for carrying out preset processing, using one or both of a temporally past characteristic parameter and a temporally future characteristic parameter, for restoring a picture image which has not been received.

## Description

### TECHNICAL FIELD

This invention relates to a method, an apparatus and a program which may conveniently be used for raising the replay quality of a moving picture on the receiver side in case encoded picture data is distributed over a transmission channel, in particular, over the Internet or a mobile network, having only a narrow transmission band.

### BACKGROUND ART

Among known techniques for compressing/encoding a moving picture signal and for efficient transmission thereof over a narrow bandwidth, there are, for example ITU-T (International Telecommunication Union Telecommunication Standardization Sector) recommendations H.263 and H.264, and MPEG (Moving Picture Experts Group)-4, internationally standardized by ISO (International Organization of Standardization)/IEC (International Electrotechnical Commission).

Meanwhile, there are known methods and apparatus in which, even in case frames are decimated so that only part of picture data are displayed, the information pertinent to the motion, inherently possessed by moving pictures data, is transmitted to enable demonstration with the feeling of actual movement (see Patent Document 1, as an example). In this Patent Document 1, a motion generating unit executes weighted summation, employing pixel values of plural pixels, based on a motion vector, associated with picture data, for each pixel making up the picture data, to generate picture data subjected to the processing of motion generation and to the processing of imparting the motion to the picture data. There is also known a moving picture decoding system in which the jerky motion of the reproduced moving pictures may be eliminated even in case much time is taken in decoding a picture for one picture image due to the low transmission speed of the communication network or to larger data volumes of compressed moving picture data (see Patent Document 2, for example). In this Patent Document 2, a motion compensation circuit generates motion interpolation vector data obtained on multiplying by m each reference motion vector data, which is obtained by dividing a motion vector of each macro-block into n equal parts. The picture data read out from a frame memory are sequentially displaced, in accordance with each motion interpolating vector data, from frame to frame, and written in a display memory. There is also known a moving picture compressing apparatus for correctly reproducing the lacking frames on the receiver side (see Patent Document 3, for example). In this Patent Document 3, a moving picture interpolating unit generates an approximate motion curve from the motion vector as found from a neighboring transmission frame to re-construct an interpolation frame for interpolation based on the distance ratio between neighboring transmission frames. There is also known a configuration in which the motion vector of a lacking pixel block is estimated and the pixel block is replaced by a motion-compensated pixel block of the previous frame in such a manner that the error-induced deterioration in the picture quality in the input signal will be perceived only to a lesser extent by a viewer (see Patent Document 4, for example). There is further known a configuration in which part of decoded pictures or motion vectors are interpolated from the previous frame or from the perimeter area of the current frame for decreasing the deterioration of a decoded picture in case of occurrence of transmission errors in a transmission channel (see Patent Document 5, for example). There is additionally known a configuration in which a suitable interpolated frame is re-constructed between neighboring transmission frames, from the motion vector, and the processing of frame interpolation is carried out for correctly re-constructing a lacking frame on the receiver side (see Patent Document 6, for example).

Patent Document 1: JP Patent Kokai Publication No. JP-P2000-333131A (page 6, Fig.1)
Patent Document 2: JP Patent Kokai Publication No. JP-A-07-67114 (page 3, Fig.1)
Patent Document 3: JP Patent Kokai Publication No. JP-A-07-177514 (pages 3, 5 and Fig.1)
Patent Document 4: JP Patent Kokai Publication No. JP-A-08-9386 (page 3, Fig.1)
Patent Document 5: JP Patent Kokai Publication No. JP-A-08-79742 (page 3, Fig.1)
Patent Document 6: JP Patent Kokai Publication No. JP-A-10-271508 (pages 2, 3 and Fig.1)

### DISCLOSURE OF THE INVENTION

### PROBLEMS TO BE SOLVED BY THE INVENTION

It is well-known that the compression system, such as H.263, H.264 or MPEG-4, is of a high compression factor. However, in case moving picture contents are distributed over a mobile transmission path of a narrow bandwidth, such as, for example, a 28.8 kbps transmission path for the PDC (Personal Digital Cellular) mobile phone or a 64 kbps transmission path for a third generation (3GPP) mobile phone, or over the Internet, it is necessary to drastically reduce the number of frames of moving pictures per second (number of frames per second or fps), for example, to 2 fps for PDC or 5 fps for the third generation (3GPP).

Thus, on the receiving side, information dropout occurs significantly in particular for contents with relatively vigorous motion, such that it becomes difficult to regenerate sufficient movements, with the result that the replay quality is deteriorated significantly.

Accordingly, it is a primary object of the present invention to provide a method, an apparatus and a program for reproducing a moving picture, whereby the fps on the receiver side can be increased to express the motion sufficiently to improve the quality of the moving picture even in cases where the transmission speed is low such as on a mobile transmission path or on the Internet such that no sufficient fps (number of frames of moving pictures per second) can be secured.

It is a second object of the present invention to provide a method, a program and an apparatus for reproducing a moving picture, in which processing is performed only on the receiving side, without meddling with processing on the transmitting side, and in which pre-existing components, such as en encoder, or the compressed/encoded stream, may be used unchanged.

It is a third object of the present invention to provide a method, a program and an apparatus for reproducing a moving picture, in which it is sufficient to add limited functions on the receiving side and in which only a small amount of processing is needed on the receiving side.

### MEANS TO SOLVE THE PROBLEMS

For accomplishing the above objects, the invention disclosed in the present application is arranged substantially as follows:

An apparatus, in accordance with one aspect of the present invention, comprises a decoder, said decoder including a decoding unit for receiving a bitstream, obtained on compressing/encoding a moving picture, and for restoring a picture image from the bitstream, a characteristic parameter extraction unit for extracting a characteristic parameter from the picture image restored, and a picture reconstruction unit for carrying out preset processing, using a temporally past characteristic parameter and/or a temporally future characteristic parameter, for restoring a picture image which has not been received.

An apparatus, in accordance with a second aspect of the present invention, comprises a decoder, said decoder including a decoding unit for receiving a bitstream, obtained on compressing/encoding a moving picture, decoding at least one characteristic parameter from the bitstream, outputting the characteristic parameter decoded, and for restoring a picture image, using the characteristic parameter decoded, and a picture reconstruction unit for carrying out preset processing, using a temporally past characteristic parameter and/or a temporally future characteristic parameter, for restoring a picture image which has not been received.

An apparatus, in accordance with a third aspect of the present invention, comprises a decoder, said decoder including a decoding unit for receiving a bitstream, obtained on compressing/encoding a moving picture, and for restoring a picture image from the bitstream, and a picture reconstruction unit for dividing the picture image into a plurality of blocks, each being of a preset small size, extracting a characteristic parameter from the picture image restored, in at least one of the blocks, deciding on whether or not preset processing is to be carried out, with the use of a temporally past characteristic parameter and/or a temporally future characteristic parameter, and for subsequently restoring a picture image which has not been received.

An apparatus, in accordance with a fourth aspect of the present invention, comprises a decoder, said decoder including a decoding unit for receiving a bitstream, obtained on compressing/encoding a moving picture, decoding at least one characteristic parameter from the bitstream, outputting the so decoded characteristic parameter, and for restoring a picture image, using the decoded characteristic parameter, and
a picture reconstruction unit for dividing the picture image into a plurality of blocks, each being of a preset small size, deciding on whether or not preset processing is to be carried out, in at least one small-sized block, with the use of a temporally past characteristic parameter and/or a temporally future characteristic parameter, and for subsequently restoring a picture image which has not been received.

An apparatus, in accordance with a fifth aspect of the present invention, comprises a decoder, said decoder including a decoding unit for receiving a bitstream, obtained on compressing/encoding a moving picture, and for restoring a picture image from the bitstream, a characteristic parameter extraction unit for extracting a characteristic parameter from the restored picture image, and a picture reconstruction unit for carrying out interpolation, using at least one of a temporally past characteristic parameter and a temporally future characteristic parameter, along the time axis, for subsequently restoring a picture image which has not been received.

An apparatus, in accordance with a sixth aspect of the present invention, comprises a decoder, said decoder including a decoding unit for receiving a bitstream, obtained on compressing/encoding a moving picture, decoding at least one characteristic parameter from the bitstream, outputting the so decoded characteristic parameter, and for restoring a picture image, using the characteristic parameter decoded, and
a picture reconstruction unit for carrying out interpolation, using at least one of a temporally past characteristic parameter and a temporally future characteristic parameter, along the time axis, for subsequently restoring a picture image which has not been received.

An apparatus, in accordance with a seventh aspect of the present invention, comprises a decoder, said decoder including a decoding unit for receiving a bitstream, obtained on compressing/encoding a moving picture, and for restoring a picture image from the bitstream, and a picture reconstruction unit for dividing the picture image into a plurality of blocks, each being of a preset small size, extracting a characteristic parameter from the picture image restored, in at least one of the blocks, deciding on whether or not interpolation along the time axis is to be carried out, with the use of at least one of a temporally past characteristic parameter and a temporally future characteristic parameter, and for subsequently restoring a picture image which has not been received.

An apparatus, in accordance with an eighth aspect of the present invention, comprises a decoder, said decoder including a decoding unit for receiving a bitstream, obtained on compressing/encoding a moving picture, decoding at least one characteristic parameter from the bitstream, outputting the so decoded characteristic parameter, and for restoring a picture image, using the characteristic parameter decoded, and
a picture reconstruction unit for dividing the picture image into a plurality of blocks, each being of a preset small size, deciding, in at least one of the small-sized blocks, on whether or not interpolation is to be carried out, with the use of at least one of a temporally past characteristic parameter and a temporally future characteristic parameter, and for subsequently restoring a picture image which has not been received.

A method, in accordance with one aspect of the present invention, comprises a step of a decoder receiving a bitstream, obtained on compressing/encoding a moving picture, and restoring a picture image from the bitstream, a step of a characteristic parameter extraction unit extracting a characteristic parameter from the picture image restored in the decoder, and a step of a picture reconstruction unit carrying out preset processing, with the use of a temporally past characteristic parameter and/or a temporally future characteristic parameter, for restoring a picture image which has not been received.

According to the present invention, there are provided methods in accordance with second to eighth aspects in association with the apparatus in accordance with the second to eighth aspects mentioned above, respectively. According to the present invention, there are also provided, in association with the method of each of the respective aspects, a computer program in which the respective processing steps are carried out on a computer or on a processor.

According to the present invention, the information on a compressed/encoded picture is received and decoded to restore a picture image, and a preset characteristic parameter is extracted from the picture image restored or from the picture information acquired in the course of the decoding. From the characteristic parameter and from the picture image restored, a picture image different from the restored image may be restored to enable restoration of a picture image which has not been received.

### MERITORIOUS EFFECT OF THE INVENTION

According to the present invention, a picture which has not been received may be restored on a receiving side, using a preset characteristic parameter. Hence, even if it is not possible to provide a sufficient number of frames due to, for example, a low transmission speed of the mobile transmission channel or on the Internet, the number of picture frames can be increased on the receiving side to enable the movement to be expressed sufficiently satisfactorily, thereby improving the quality of a moving picture.

Moreover, according to the present invention, the above objects can be accomplished solely by processing on the receiving side, so that it is unnecessary to meddle with the transmitting side. Thus, according to the present invention, the pre-existing encoder or the pre-existing compressed/encoded stream may be used unchanged.

Furthermore, according to the present invention, it is only necessary to add only certain functions on the receiving side, so that there is no fear of the cost increasing, while the amount of processing on the receiving side is also only small.

### BRIEF DESCRIPTION OF THE DRAWINGS

Fig.1 is a diagram showing the configuration of a first embodiment of the present invention.
Fig.2 is a diagram showing the configuration of a second embodiment of the present invention.
Fig.3 is a diagram showing the configuration of a third embodiment of the present invention.
Fig.4 is a diagram showing the configuration of a fourth embodiment of the present invention.
Fig.5 is a diagram showing the configuration of a fifth embodiment of the present invention.
Fig.6 is a diagram showing the configuration of a sixth embodiment of the present invention.
Fig.7 is a diagram showing the configuration of a seventh embodiment of the present invention.
Fig.8 is a diagram showing the configuration of an eighth embodiment of the present invention.

### EXPLANATIONS OF SYMBOLS

200 decoder
201 receive buffer
202 variable length decoder
203 inverse quantizer
204 inverse transformer
205 frame memory
206 motion compensation predictor
207 adder
210 characteristic parameter extractor
211 frame memory
212, 222, 231 moving picture reconstructor
215, 230 interpolators
220 division-into-small-size block unit
221 characteristic parameter extraction & decision unit
225 division-into-small-block & decision unit

### MOST PREFERRED MODE FOR CARRYING OUT THE INVENTION

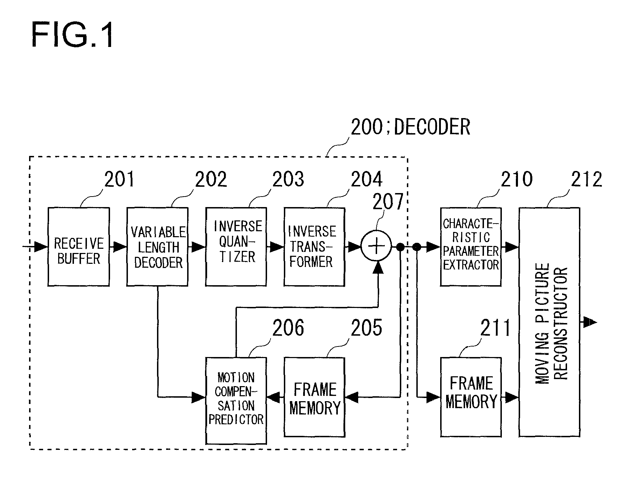

Reference will now be made to the accompanying drawings for describing the present invention in more detail. Fig.1 is a diagram showing the configuration of a moving picture reproducing apparatus according to a first embodiment of the present invention. Referring to Fig.1, the apparatus includes a decoder 200, a characteristic parameter extractor 210, a frame memory 211 and a moving picture reconstructor 212.

The decoder 201 includes a receive buffer 201, a variable length decoder 202, a inverse quantizer 203, an inverse transformer 204, a frame memory 205, a motion compensation predictor 206, and an adder 207.

The receive buffer 201 receives a bitstream, obtained on compressing/encoding a moving picture, and transiently stores the bitstream received. The receiving buffer then outputs the encoded bitstream, thus received and stored, to the variable length decoder 202. It is noted that, while the compression/encoding of a moving picture is carried out on a transmitting side, not shown, an encoder required for such compression/encoding may be an encoder constructed in accordance with H.261, H.263 or H.264, as ITU-T recommendations, with MPEG-4, as ISO/IEC recommendations, or with other moving picture compression/encoding systems.

The variable length decoder 202 carries out variable length decoding on a received encoded output bitstream, output from the receive buffer 201, and outputs the decoded quantized transform coefficients to the inverse quantizer 203.

The inverse quantizer 203 carries out calculations for inverse quantization on the quantized transform coefficients, output from the variable length decoder 202, to output the resulting inverse quantized transform coefficients to the inverse transformer 204.

The inverse transformer 204 carries out I-DCT (Inverse Discrete Cosine Transform), as an example, on the transform coefficients, output from the inverse quantizer 203, to output the resulting transformed moving picture signal to the adder 207.

In the present embodiment, I-DCT is used as an inverse transform in the inverse transformer 204. However, other transforms, such as inverse integer transform for H.264, may, of course, be used.

The frame memory 205 temporally stores a moving picture signal output from the adder 207.

The motion compensation predictor 206 executes motion compensation/prediction on the moving picture signal stored in the frame memory 205, using the characteristic parameter output from the variable length decoder 202. The motion compensation predictor 206 outputs a moving picture signal, obtained as a result of the motion compensation/prediction, to the adder 207.

The adder 207 adds a moving picture signal, output from the inverse transformer 204, to the moving picture signal output from the motion compensation predictor 206. The moving picture signal, obtained on addition by the adder 207, is output, as a decoder output signal, to the frame memories 205, 211 and to the characteristic parameter extractor 210.

The characteristic parameter extractor 210 extracts at least one characteristic parameter from the moving picture signal output from the decoder to output the so extracted characteristic parameter to the moving picture reconstructor 212. As the characteristic parameter, a motion vector, for example, may be used.

The moving picture reconstructor 212, receiving one or both of a temporally past characteristic parameter and a future characteristic parameter, while receiving one or both of a temporally past picture and a future picture (decoded picture) from the frame memory 211, combines the so received picture(s) with the aforementioned characteristic parameter(s) to perform preset processing to reproduce and output a moving picture frame which has not been received. The preset processing may, for example, be the processing of motion compensation/inter-frame prediction employing the motion vector.

The method according to the first embodiment of the present invention is made up by the following steps, as the processing sequence. Meanwhile, since the method is made up of a sequence of steps 1 to 3, it is not shown as a flowchart. The same applies for the next following embodiments.

Step 1: The decoder 200 receives a bitstream, obtained on compressing/encoding a moving picture, to restore a picture image from the bitstream received.

Step 2: The characteristic parameter extractor 210 extracts the characteristic parameter from the picture image restored by the decoder 200.

Step 3: The moving picture reconstructor 212 applies preset processing, such as motion compensation/inter-frame prediction, employing the motion vector, with the use of the temporally past characteristic parameter and/or the temporally past characteristic parameter, to restore a picture image which has not been received.

The above processing may be implemented by carrying out a program on a computer, such as a DSP (digital signal processor), making up a moving picture reproducing apparatus. The same may be said of the embodiments as hereinafter explained.

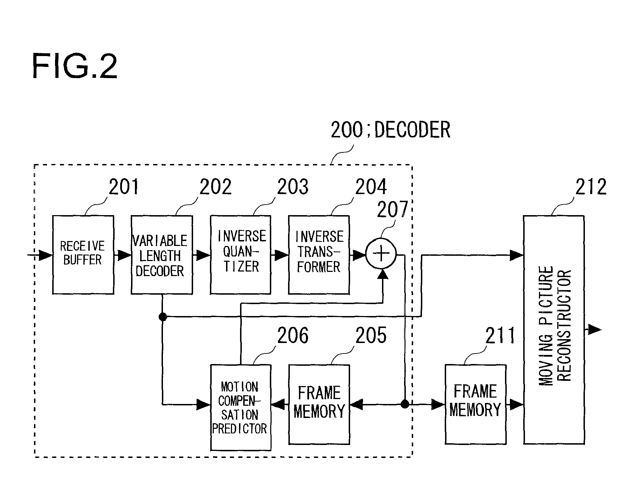

A second embodiment of the present invention will now be described. Fig.2 is a diagram showing the configuration of the second embodiment of the present invention. In Fig.2, the parts or components which are the same as or equivalent to those shown in Fig.1, are denoted with the same reference numerals. Referring to Fig.2, the characteristic parameter extractor 210 is not used. In the following, only the points of difference from the above-described first embodiment will be described.

Referring to Fig.2, a characteristic parameter is taken out from an output of a variable length decoder 202 and routed to a moving picture reconstructor 212. Hence, the characteristic parameter extractor 210, provided in the above-described first embodiment, is dispensed with.

The method according to the second embodiment of the present invention is made up by the following steps, as the processing sequence.

Step 1: A decoder 200 receives a bitstream, obtained on compressing/encoding a moving picture, and decodes at least one characteristic parameter from the bitstream to output the so decoded characteristic parameter. A picture image then is restored, using the so decoded characteristic parameter.

Step 2: A moving picture reconstructor 212 carries out preset processing (for example, motion compensation/inter-frame prediction employing the motion vector), using the temporally past characteristic parameter and/or the temporally future characteristic parameter, to restore a picture image which has not been received.

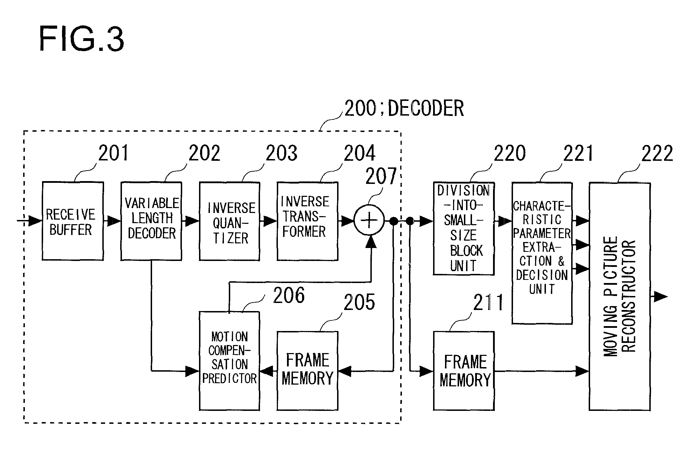

A third embodiment of the present invention will now be described. Fig.3 is a diagram showing the configuration of the third embodiment of the present invention. In Fig.3, the parts or components which are the same as or equivalent to those shown in Fig. 1, are denoted with the same reference numerals. Referring to Fig.3, in the present embodiment, a division-into-small-size block unit 220 and a characteristic parameter extraction & decision unit 221 are provided between a decoder 200 (which is the same as one shown in the first embodiment shown in Fig.1) and a moving picture reconstructor 222. In the following, explanation on the parts or components which are the same as those shown in the first embodiment of Fig.1 is omitted from time to time and the points of difference will be described.

The division-into-small-size block unit 220 divides the restored picture image into preset small-sized blocks, and outputs the demarcation of each small-sized blocks. The size of the small-sized block may, for example, be the size of a macro-block (MB) or a size equal to an integer multiple of the macro-block.

The characteristic parameter extraction & decision unit 221 extracts a characteristic parameter in at least one small-sized block to output the so extracted parameter to a moving picture reconstructor 222. Such characteristic parameter may, for example be a motion vector.

In at least one small-sized block, the characteristic parameter extraction & decision unit 221 decides, using the characteristic parameter, on whether or not processing in the moving picture reconstructor 222 is to be carried out, and accordingly outputs a decision signal. For example, the characteristic parameter extraction & decision unit 221 decides on whether the small-sized block in question is a dynamic region or a static region, and outputs the result of decision as a decision signal.

The moving picture reconstructor 222 receives the demarcations of the small-sized blocks, a decision signal for at least one small-sized block and a characteristic parameter for at least one small-sized block. The moving picture reconstruction unit also receives one or both of a past picture and a future picture from the frame memory 211 and executes preset processing in at least one small-sized block, in accordance with an input decision signal, to restore a picture image which has not been received. This preset processing may, for example, be motion compensation/inter-frame prediction employing the motion vector.

The method according to the third embodiment of the present invention is made up by the following steps, as the processing sequence.

Step 1: A decoder 200 receives a bitstream, obtained on compressing/encoding a moving picture, and restores a picture image from the bitstream.

Step 2: A division-into-small-size block unit 220 divides the picture image into plural small-sized blocks, each being of a preset size.

Step S3: The characteristic parameter extraction & decision unit 221 extracts at least a characteristic parameter from the restored picture image, in at least one small-sized block, and outputs the so extracted characteristic parameter to the moving picture reconstructor 222. The characteristic parameter extraction and decision unit decides, using a temporally past characteristic parameter and/or a temporally future characteristic parameter, on whether or not preset processing, such as motion compensation/inter-frame prediction, employing the motion vector, is to be carried out, and subsequently restores a picture image which has not been received.

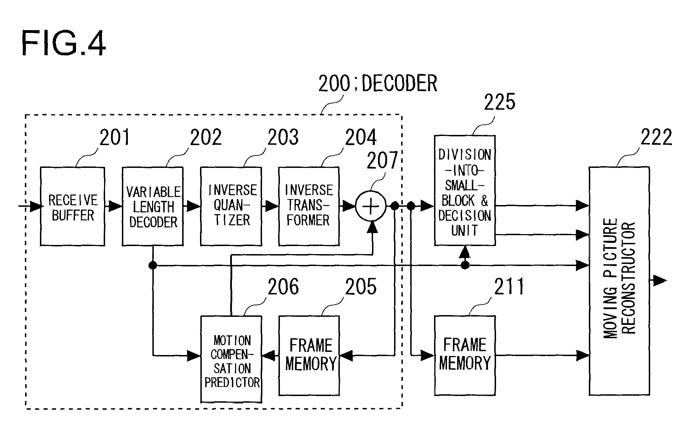

A fourth embodiment of the present invention will now be described. Fig.4 is a diagram showing the configuration of the fourth embodiment of the present invention. In Fig.4, the parts or components which are the same as or equivalent to those shown in Fig. 1, are denoted with the same reference numerals. In the present embodiment, a division-into-small-block & decision unit 225 is provided between a decoder 200 (which is the same as one shown in the first embodiment of Fig.1) and a moving picture reconstructor 222. In the following, explanation on the parts or components which are the same as those shown in the first and third embodiments of Figs.1 and 3 is omitted from time to time and the points of difference will be described.

The division-into-small-block & decision unit 225 divides a restored picture image into a plural number of preset small-sized blocks to output demarcations of the small-sized blocks. As the size of the small-sized blocks, the size of a macro-block (MB) or the size equal to an integer multiple of macro-block size is used.

The division-into-small-block & decision unit 225 decides on whether or not processing by the moving picture reconstructor 222 is to be carried out in at least one small-sized block, using the characteristic parameter, and outputs a decision signal. For example, the division-into-small-block & decision unit 225 decides on whether or not the small-sized block in question is a dynamic region or a static region, and outputs the result of decision as a decision signal.

The method according to the fourth embodiment of the present invention is made up by the following steps, as the processing sequence.

Step 1: The decoder 200 receives a bitstream, obtained on compressing/encoding a moving picture, and restores at least one characteristic parameter from the bitstream to output the so restored parameter. The decoder restores the picture image, using the so decoded characteristic parameter.

Step 2: The division-into-small-block & decision unit 225 divides the picture image into a plural number of preset small-sized blocks. In at least one of these small-sized blocks, the moving picture reconstructor 222 decides, using a temporally past characteristic parameter and/or a temporally future characteristic parameter, on whether or not the preset processing, for example, motion compensation/inter-frame prediction, employing the motion vector, is to be carried out.

Step 3: The moving picture reconstructor 222 receives demarcations into plural small-sized blocks, a decision signal in at least one small-sized block, a characteristic parameter in at least one small-sized block, and one or both of the past picture image and the future picture image from the frame memory 211, to restore a picture image which has not been received.

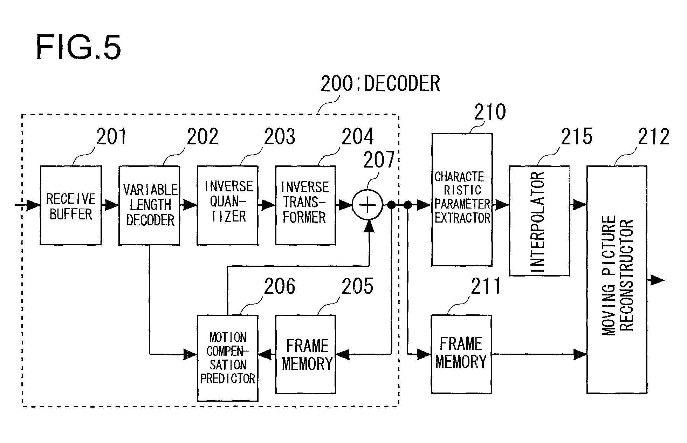

A fifth embodiment of the present invention will now be described. Fig.5 is a diagram showing the configuration of the fifth embodiment of the present invention. In Fig.5, the parts or components which are the same as or equivalent to those shown in Fig.1, are denoted with the same reference numerals. In the present embodiment, an interpolator 215 is provided between a characteristic parameter extractor 210 and a moving picture reconstructor 212 of the above-described first embodiment shown in Fig.1. In the following, explanation on the parts or components which are the same as those shown in the first embodiment of Fig.1 is omitted from time to time and the points of difference will be described.

The interpolator 215 receives an output of the characteristic parameter extractor 210, and carries out interpolation along the time axis, using at least one of the temporally past characteristic parameter and the temporally future characteristic parameter, to output the characteristic parameter, produced by the interpolation, to the moving picture reconstructor 212. As the characteristic parameter, the motion vector, for example, may be used. The moving picture reconstructor 212 executes motion prediction/inter-frame prediction, using the motion vector, as the characteristic parameter from the interpolator 215, to restore a moving picture from the past picture image and/or the future picture image from the frame memory 211.

The method according to the fifth embodiment of the present invention is made up by the following steps, as the processing sequence.

Step 1: The decoder 200 receives a bitstream, obtained on compressing/encoding a moving picture, and restores a picture image from the bit stream.

Step S2: The characteristic parameter extractor 210 extracts a characteristic parameter from the picture restored by the decoder 200.

Step S3: The interpolator 215 carries out interpolation, using at least one of the temporally past characteristic parameter and the temporally future characteristic parameter, along the time axis, and outputs the so interpolated characteristic parameter to the moving picture reconstructor 212.

Step S4: The moving picture reconstructor 212 receives an output of the interpolator 215 (an interpolated characteristic vector) and one or both of the past picture image and the future picture image from the frame memory 211 to restore a picture image which has not been received.

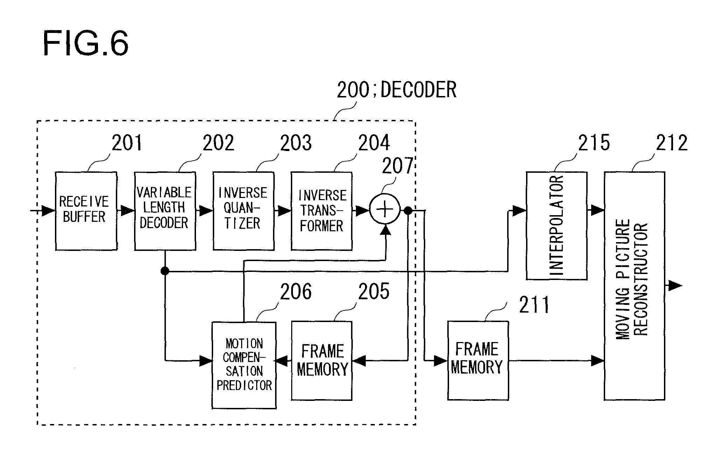

A sixth embodiment of the present invention will now be described. Fig.6 is a diagram showing the configuration of the sixth embodiment of the present invention. In Fig.6, the parts or components which are the same as or equivalent to those shown in Fig.1, are denoted with the same reference numerals. In the present embodiment, an interpolator 215 is provided between a variable length decoder 202 of a decoder 200 and a moving picture reconstructor 212 of the above-described first embodiment shown in Fig.1. In the following, the explanation on the same parts or components as those of the first and fifth embodiments, shown in Figs.1 and 5, respectively, is omitted from time to time, and only the points of difference will be explained.

In the present embodiment, the interpolator 215 receives a characteristic parameter from an output of the variable length decoder 202. Hence, in the present embodiment, the characteristic parameter extractor 210, shown in Fig.5, is dispended with.

The method according to the sixth embodiment of the present invention is made up by the following steps, as the processing sequence.

Step 1: The decoder 200 receives a bitstream, obtained on compressing/encoding a moving picture. The decoder decodes at least one characteristic parameter from the above-described bitstream, and outputs the so decoded characteristic parameter to restore a picture image, using the decoded characteristic parameter.

Step 2: The interpolator 215 acquires at least one of the temporally past characteristic parameter and the temporally future characteristic parameter and carries out interpolation using the so acquired characteristic parameter(s) along the time axis. The moving picture reconstructor 212 restores a picture image, which has not been received, based on the temporally interpolated characteristic parameter output from the interpolator 215.

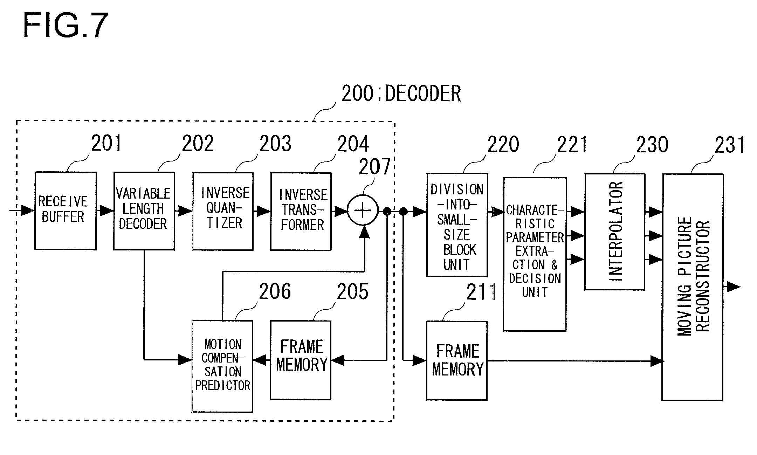

A seventh embodiment of the present invention will now be described. Fig.7 is a diagram showing the configuration of the seventh embodiment of the present invention. In Fig.7, the parts or components which are the same as or equivalent to those shown in Fig.1 are denoted with the same reference numerals. In the present embodiment, there are provided, between a decoder 200 and a moving picture reconstructor 231, a division-into-small-size block unit 220, a characteristic parameter extraction & decision unit 221 and an interpolator 230. In the following, the explanation on the same parts or components as those of the first and third embodiments, shown in Figs.1 and 3, respectively, is omitted from time to time, and only the points of difference will be explained.

The division-into-small-block unit 220 divides a restored picture image into a plural number of preset small-sized blocks to output demarcations of the small-sized blocks. As the size of the small-sized blocks, the size of a macro-block (MB) or the size equal to an integer multiple of macro-block size is used.

The characteristic parameter extraction & decision unit 221 extracts a characteristic parameter, in at least one small-sized block, and outputs the so extracted characteristic parameter to the moving picture reconstructor 231. As typical of the characteristic parameter, the motion vector may be used.

In at least one small-sized block, the characteristic parameter extraction & decision unit 221 decides on whether or not the processing in the moving picture reconstructor 231 is to be carried out, with the use of a characteristic parameter, and outputs a decision signal. For example, the characteristic parameter extraction & decision unit 221 decides on whether or not the small-sized block is a dynamic one or a static one, and outputs the result of decision by a decision signal.

The interpolator 230 receives the demarcations into small-sized blocks, a characteristic parameter and a decision signal, in at least one small-sized block, and carries out the interpolation, along the time axis, using at least one of the temporally past characteristic parameter and the temporally future characteristic parameter, in accordance with the decision signal.

The moving picture reconstructor 231 receives the demarcations into the small-sized blocks, the decision signal in at least one small-sized block, and an output of the interpolator 230 in at least one small-sized block. The moving picture reconstruction unit also receives one or both of the past picture image and the future picture image from the frame memory 211. The moving picture reconstruction unit carries out preset processing, in at least one small-sized block, in accordance with the decision signal, to restore a picture frame which has not been received. The preset processing may, for example, be motion compensation/inter-frame prediction.

The method according to the seventh embodiment of the present invention is made up by the following steps, as the processing sequence.

Step 1: The decoder 200 receives a bitstream, obtained on compressing/encoding a moving picture, and restores a picture image from the bitstream.

Step S2: The division-into-small-size block unit 220 divides the picture image into a plural number of preset small-sized blocks.

Step S3: The characteristic parameter extraction & decision unit 221 extracts a characteristic parameter, from the aforementioned restored image, in at least one small-sized block, and decides on whether or not interpolation along the time axis is to be carried out, using at least one of the temporally past characteristic parameter and the temporally future characteristic parameter.

Step S4: The moving picture reconstructor 231 receives demarcations of division into plural small-sized blocks, decision signal in at least one small-sized block, and the output of the interpolator 230 in at least one small-sized block, to restore a picture image which has not been received.

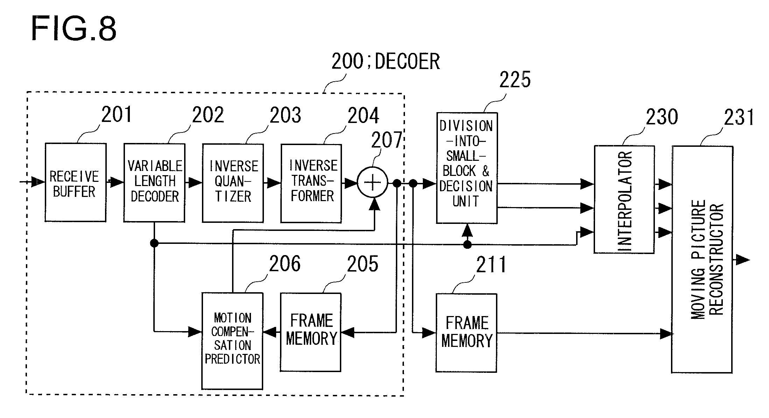

An eighth embodiment of the present invention will now be described. Fig.8 is a diagram showing the configuration of the eighth embodiment of the present invention. In Fig.8, the parts or components which are the same as or equivalent to those shown in Fig.7 are denoted with the same reference numerals. The present embodiment includes a division-into-small-sized-section & decision unit 225 and an interpolator 230 between a decoder 200 and a moving picture reconstructor 231. In the following, the explanation on the same parts or components as those of the first and seventh embodiments, shown in Figs.1 and 7, respectively, is omitted from time to time, and only the points of difference will be explained.

The division-into-small-block & decision unit 225 divides the restored picture image into a plural number of preset small-sized blocks, and outputs demarcations of the small-sized blocks. The size of the small-sized block used may, for example, be the size of a macro-block (MB) or the size equal to an integer multiple of the macro-block.

In at least one small-sized block, the division-into-small-block & decision unit 225 decides, using the characteristic parameter, on whether or not the processing in the moving picture reconstructor 231 is to be carried out, and accordingly outputs a decision signal. For example, the division-into-small-block & decision unit decides on whether the small-sized block in question is a dynamic area or a static area, and outputs the result of decision as a decision signal.

Since the interpolator 230 receives the characteristic parameter from an output of the variable length decoder 202, the characteristic parameter extraction & decision unit 221 of the seventh embodiment, shown in Fig.7, is dispensed with.

The method according to the eighth embodiment of the present invention is made up by the following steps, as the processing sequence.

Step 1: The decoder 200 receives a bitstream, obtained on compressing/encoding a moving picture, and decodes at least one characteristic parameter from the bitstream to output the so decoded parameter. The decoder restores a picture image, using the so decoded parameter.

Step S2: The division-into-small-block & decision unit 225 divides a picture image into a plural number of preset small-sized blocks, and decides on whether or not interpolation is to be made along the time axis, in at least one small-sized block, using at least one of the temporally past characteristic parameter and the temporally future characteristic parameter.

Step S3: The moving picture reconstructor 231 restores a picture image, not received, using the demarcations of the small-sized blocks, the decision signal in at least one small-sized block and at least one of the temporally past characteristic parameter and the temporally future characteristic parameter from the decoder 200.

Although the present invention has so far been explained with reference to the preferred embodiments, the present invention is not limited to the particular configurations of these embodiments. It will be appreciated that the present invention may encompass various changes or corrections such as may readily be arrived at by those skilled in the art within the scope and the principle of the invention.

## Claims

1. A moving picture reproducing apparatus comprising:
a decoder unit for receiving a bitstream, obtained on compressing/encoding a moving picture, and for restoring a picture image from said bitstream;
a characteristic parameter extraction unit for extracting a characteristic parameter from the picture image restored; and
a picture reconstruction unit for carrying out preset processing, using a temporally past characteristic parameter and/or a temporally future characteristic parameter, for restoring a picture image which has not been received.

2. A moving picture reproducing apparatus comprising:
a decoder unit for receiving a bitstream, obtained on compressing/encoding a moving picture, decoding at least one characteristic parameter from said bitstream, outputting the characteristic parameter decoded, and for restoring a picture image, using the characteristic parameter decoded; and
a picture reconstruction unit for carrying out preset processing, using a temporally past characteristic parameter and/or a temporally future characteristic parameter, for restoring a picture image which has not been received.

3. A moving picture reproducing apparatus comprising:
a decoder unit for receiving a bitstream, obtained on compressing/encoding a moving picture, and for restoring a picture image from said bitstream; and
a picture reconstruction unit for dividing the picture image into a plurality of blocks, each being of a preset small size, extracting a characteristic parameter from the picture image restored, in at least one of said blocks, deciding on whether or not preset processing is to be carried out, with the use of a temporally past characteristic parameter and/or a temporally future characteristic parameter, and for subsequently restoring a picture image which has not been received.

4. A moving picture reproducing apparatus comprising:
a decoder unit for receiving a bitstream, obtained on compressing/encoding a moving picture, decoding at least one characteristic parameter from said bitstream, outputting the so decoded characteristic parameter, and for restoring a picture image, using the decoded characteristic parameter; and
a picture reconstruction unit for dividing the picture image into a plurality of blocks, each being of a preset small size, deciding on whether or not preset processing is to be carried out, in at least one small-sized block, with the use of a temporally past characteristic parameter and/or a temporally future characteristic parameter, and for subsequently restoring a picture image which has not been received.

5. A moving picture reproducing apparatus comprising:
a decoder unit for receiving a bitstream, obtained on compressing/encoding a moving picture, and for restoring a picture image from said bitstream;
a characteristic parameter extraction unit for extracting a characteristic parameter from the picture image restored; and
a picture reconstruction unit for carrying out interpolation, using at least one of a temporally past characteristic parameter and a temporally future characteristic parameter, along the time axis, for subsequently restoring a picture image which has not been received.

6. A moving picture reproducing apparatus comprising:
a decoder unit for receiving a bitstream, obtained on compressing/encoding a moving picture, decoding at least one characteristic parameter from said bitstream, outputting the so decoded characteristic parameter, and for restoring a picture image, using the characteristic parameter decoded; and
a picture reconstruction unit for carrying out interpolation, using at least one of a temporally past characteristic parameter and a temporally future characteristic parameter, along the time axis, for subsequently restoring a picture image which has not been received.

7. A moving picture reproducing apparatus comprising:
a decoder unit for receiving a bitstream, obtained on compressing/encoding a moving picture, and for restoring a picture image from said bitstream; and
a picture reconstruction unit for dividing the picture image into a plurality of blocks, each being of a preset small size, extracting a characteristic parameter from the picture image restored, in at least one of said blocks, deciding on whether or not interpolation along the time axis is to be carried out, with the use of at least one of a temporally past characteristic parameter and a temporally future characteristic parameter, and for subsequently restoring a picture image which has not been received.

8. A moving picture reproducing apparatus comprising:
a decoder unit for receiving a bitstream, obtained on compressing/encoding a moving picture, decoding at least one characteristic parameter from said bitstream, outputting the so decoded characteristic parameter, and for restoring a picture image, using the characteristic parameter decoded; and
a picture reconstruction unit for dividing the picture image into a plurality of blocks, each being of a preset small size, deciding, in at least one of said small-sized blocks, on whether or not interpolation is to be carried out, with the use of at least one of a temporally past characteristic parameter and a temporally future characteristic parameter, and for subsequently restoring a picture image which has not been received.

9. A moving picture reproducing apparatus comprising:
a decoder, said decoder including:
a decoding unit for receiving a bitstream, obtained on compressing/encoding a moving picture, decoding the bitstream received, and for outputting quantized transform coefficients;
a inverse quantizer for carrying out calculations for inverse quantization on the quantized transform coefficients output from said decoding unit;
an inverse transformer for carrying out inverse transform, which is inverse to the transform carried out on an encoder side, on transform coefficients obtained on inverse quantization by said inverse quantizer;
an adder receiving said moving picture signal, obtained on inverse transform by said inverse transformer, at an input end thereof; and
a motion compensation predictor for carrying out motion compensation/prediction on the moving picture signal, output from said adder, with the use of a characteristic parameter, output from said decoding unit, and for supplying the resulting moving picture signal to another input end of said adder;
said decoder outputting, as a decoder output signal, a moving picture signal obtained on summing, by said adder, a moving picture signal output from said inverse transformer, and a moving picture signal output from said motion compensation predictor;
a frame memory for storing a moving picture signal output from said decoder;
a characteristic parameter extraction unit for extracting a characteristic parameter from the moving picture signal output from said decoder; and
a moving picture reconstruction unit for receiving the characteristic parameter from said characteristic parameter extraction unit, receiving a temporally past picture and/or a temporally future picture from said frame memory, reproducing a moving picture frame, with the use of said characteristic parameter, and for outputting the moving picture frame reproduced.

10. A moving picture reproducing apparatus comprising:
a decoder, said decoder including:
a decoding unit for receiving a bitstream, obtained on compressing/encoding a moving picture, decoding the bitstream received, and for outputting quantized transform coefficients;
a inverse quantizer for carrying out calculations for inverse quantization on the quantized transform coefficients output from said decoding unit;
an inverse transformer for carrying out inverse transform, which is inverse to the transform carried out on an encoder side, on transform coefficients obtained on inverse quantization by said inverse quantizer;
an adder receiving said moving picture signal, obtained on inverse transform by said inverse transformer, at an input end thereof; and
a motion compensation predictor for carrying out motion compensation/prediction on the moving picture signal, output from said adder, using a characteristic parameter output from said decoding unit, and for supplying the resulting moving picture signal to another input end of said adder;
said decoder outputting, as a decoder output signal, a moving picture signal, obtained on summing, by said adder, a moving picture signal output from said inverse transformer and a moving picture signal output from said motion compensation predictor;
a frame memory for storing a moving picture signal output from said decoder; and
a moving picture reconstruction unit for receiving the characteristic parameter from an output from said decoder, receiving a temporally past picture and/or a temporally future picture from said frame memory, reproducing a moving picture frame using said characteristic parameter and for outputting the moving picture frame reproduced.

11. A moving picture reproducing apparatus comprising:
a decoder, said decoder including:
a decoding unit for receiving a bitstream, obtained on compressing/encoding a moving picture, decoding the bitstream received, and for outputting quantized transform coefficients;
a inverse quantizer for carrying out calculations for inverse quantization on the quantized transform coefficients output from said decoding unit;
an inverse transformer for carrying out inverse transform, which is inverse to the transform carried out on an encoder side, on transform coefficients obtained on inverse quantization by said inverse quantizer;
an adder receiving said moving picture signal, obtained on inverse transform by said inverse transformer, at an input end thereof; and
a motion compensation predictor for carrying out motion compensation/prediction on the moving picture signal, output from said adder, using a characteristic parameter output from said decoding unit, and for supplying the resulting moving picture signal to another input end of said adder;
said decoder outputting, as a decoder output signal, a moving picture signal obtained on summing, by said adder, a moving picture signal output from said inverse transformer, and a moving picture signal output from said motion compensation predictor;
a frame memory for storing a moving picture signal, output from said decoder;
a division-into-small-size block unit for receiving an output from said decoder, dividing a picture image restored into preset small-sized blocks, and for outputting demarcations of said small-sized blocks;
a characteristic parameter extraction/decision unit for extracting a characteristic parameter in at least one of said small-sized blocks, outputting the characteristic parameter extracted, deciding, in at least one of said small-sized blocks, on whether or not the processing for restoring a moving picture is to be carried out with use of said characteristic parameter, and for outputting a decision signal; and
a moving picture reconstruction unit for receiving the characteristic parameter, results of decision and the information on the small-sized blocks, from said characteristic parameter extractor/decision unit, receiving a temporally past picture and/or a temporally future picture, from said frame memory, reproducing a moving picture frame, with the use of said characteristic parameter, and for outputting the reproduced moving picture frame.

12. A moving picture reproducing apparatus comprising:
a decoder, said decoder including:
a decoder unit for receiving a bitstream, obtained on compressing/encoding a moving picture, decoding the bitstream received, and for outputting quantized transform coefficients;
a inverse quantizer for carrying out calculations for inverse quantization on the quantized transform coefficients output from said decoding unit;
an inverse transformer for carrying out inverse transform, which is inverse to the transform carried out on an encoder side, on transform coefficients obtained on inverse quantization by said inverse quantizer;
an adder receiving said moving picture signal, obtained on inverse transform by said inverse transformer, at an input end thereof; and
a motion compensation predictor for carrying out motion compensation/prediction on the moving picture signal, output from said adder, using a characteristic parameter output from said decoding unit, and for supplying the resulting moving picture signal to another input end of said adder;
said decoder outputting, as a decoder output signal, a signal obtained on summing, by said adder, a moving picture signal output from said inverse transformer, and a moving picture signal output from said motion compensation predictor;
a frame memory for storing a moving picture signal output from said decoder;
a division-into-small-block/decision unit for receiving an output from said decoder, dividing a picture image restored into a plurality of preset small-sized blocks, outputting demarcations of said small-sized blocks, extracting a characteristic parameter in at least one of said small-sized blocks, outputting the characteristic parameter extracted, deciding, in at least one of said small-sized blocks, on whether or not processing for restoring a moving picture is to be carried out, with the use of said characteristic parameter, and for outputting a decision signal; and
a moving picture reconstruction unit for receiving the characteristic parameter, results of decision from said division-into-small-block/decision unit and the information on the small-sized block, from said decoding unit, receiving a temporally past picture and/or a temporally future picture, from said frame memory, reproducing a moving picture frame, with the use of said characteristic parameter, and for outputting the reproduced moving picture frame.

13. A moving picture reproducing apparatus comprising:
a decoder, said decoder including:
a decoder unit for receiving a bitstream, obtained on compressing/encoding a moving picture, decoding the bitstream received, and for outputting quantized transform coefficients;
a inverse quantizer for carrying out calculations for inverse quantization on the quantized transform coefficients output from said decoding unit;
an inverse transformer for carrying out inverse transform, which is inverse to the transform carried out on an encoder side, on transform coefficients obtained on inverse quantization by said inverse quantizer;
an adder receiving said moving picture signal, obtained on inverse transform by said inverse transformer, at an input end thereof; and
a motion compensation predictor for carrying out motion compensation/prediction on the moving picture signal, output from said adder, using a characteristic parameter output from said decoding unit, and for supplying the resulting moving picture signal to another input end of said adder;
said decoder outputting, as a decoder output signal, a moving picture signal obtained on summing, by said adder, a moving picture signal output from said inverse transformer, and a moving picture signal output from said motion compensation predictor;
a frame memory for storing a moving picture signal output from said decoder;
a characteristic parameter extracting unit for extracting a characteristic parameter from the moving picture signal output from said decoder unit;
an interpolator for receiving an output of said characteristic parameter extracting unit for carrying out interpolation along the time axis using at least one of a temporally past characteristic parameter and a temporally future characteristic parameter; and
a moving picture reconstruction unit for receiving a characteristic parameter from said interpolator, receiving a temporally past picture and/or a temporally future picture from said frame memory, reproducing a moving picture frame, with the use of said interpolated characteristic parameter, and for outputting a reproduced moving picture frame.

14. A moving picture reproducing apparatus comprising:
a decoder, said decoder including:
a decoder unit for receiving a bitstream, obtained on compressing/encoding a moving picture, decoding the bitstream received, and for outputting quantized transform coefficients;
a inverse quantizer for carrying out calculations for inverse quantization on the quantized transform coefficients output from said decoding unit;
an inverse transformer for carrying out inverse transform, which is inverse to the transform carried out on an encoder side, on transform coefficients obtained on inverse quantization by said inverse quantizer;
an adder receiving said moving picture signal, obtained on inverse transform by said inverse transformer, at an input end thereof; and
a motion compensation predictor for carrying out motion compensation/prediction on the moving picture signal, output from said adder, using a characteristic parameter output from said decoding unit, and for supplying the resulting moving picture signal to another input end of said adder;
said decoder outputting, as a decoder output signal, a signal obtained on summing, by said adder, a moving picture signal output from said inverse transformer, and a moving picture signal output from said motion compensation predictor;
a frame memory for storing a moving picture signal, output from said decoder;
an interpolator for receiving a characteristic parameter from the decoding unit of said decoder for carrying out interpolation along the time axis using at least one of the temporally past characteristic parameter and the temporally future characteristic parameter; and
a moving picture reconstruction unit for receiving a characteristic parameter from said interpolator, receiving a temporally past characteristic parameter and/or a temporally future characteristic parameter from said frame memory, reproducing a moving picture frame, with the use of said interpolated characteristic parameter, and for outputting a reproduced moving picture frame.

15. A moving picture reproducing apparatus comprising:
a decoder, said decoder including:
a decoding unit for receiving a bitstream, obtained on compressing/encoding a moving picture, decoding the bitstream received, and for outputting quantized transform coefficients;
a inverse quantizer for carrying out calculations for inverse quantization on the quantized transform coefficients output from said decoding unit;
an inverse transformer for carrying out inverse transform, which is inverse to the transform carried out on an encoder side, on transform coefficients obtained on inverse quantization by said inverse quantizer;
an adder receiving said moving picture signal, obtained on inverse transform by said inverse transformer, at an input end thereof; and
a motion compensation predictor for carrying out motion compensation/prediction on the moving picture signal, output from said adder, using a characteristic parameter output from said decoding unit, and for supplying the resulting moving picture signal to another input end of said adder;
said decoder outputting, as a decoder output signal, a moving picture signal obtained on summing, by said adder, a moving picture signal output from said inverse transformer, and a moving picture signal output from said motion compensation predictor;
a frame memory for storing a moving picture signal, output from said decoder;
a division-into-small-size block unit for receiving an output of said decoder, dividing a restored picture frame into a plurality of blocks, each being of preset small size, and for outputting demarcations of the small-sized blocks;
a characteristic parameter extraction/decision unit for receiving the information on the division into said small-sized blocks from said division-into-small-size block unit, extracting and outputting a characteristic parameter in at least one of said small-sized blocks, deciding on whether or not the processing for restoration of a moving picture is to be carried out, in at least one of said small-sized blocks, with the use of said characteristic parameter, and for outputting a decision signal;
an interpolator for receiving the characteristic parameter from said characteristic parameter extraction/decision unit and for carrying out interpolation along the time axis, using at least one of a temporally past characteristic parameter and a future characteristic parameter; and
a moving picture reconstruction unit for receiving the characteristic parameter, obtained on interpolation by said interpolator, result of said decision and the information on the small-sized blocks, for receiving a temporally past picture and/or a temporally future picture from said frame memory, reproducing a moving picture frame, with the use of said characteristic parameter, and for outputting the moving picture frame reproduced.

16. A moving picture reproducing apparatus comprising:
a decoder, said decoder including:
a decoding unit for receiving a bitstream, obtained on compressing/encoding a moving picture, decoding the bitstream received, and for outputting quantized transform coefficients;
a inverse quantizer for carrying out calculations for inverse quantization on the quantized transform coefficients output from said decoding unit;
an inverse transformer for carrying out inverse transform, which is inverse to the transform carried out on an encoder side, on transform coefficients obtained on inverse quantization by said inverse quantizer;
an adder receiving said moving picture signal, obtained on inverse transform by said inverse transformer, at an input end thereof; and
a motion compensation predictor for carrying out motion compensation/prediction on the moving picture signal, output from said adder, using a characteristic parameter output from said decoding unit, and for supplying the resulting moving picture signal to another input end of said adder;
said decoder outputting a signal, as a decoder output signal, obtained on summing, by said adder, a moving picture signal output from said inverse transformer, and a moving picture signal output from said motion compensation predictor;
a frame memory for storing a moving picture signal output from said decoder;
a division-into-small-block/decision unit for receiving an output from said decoder, dividing a restored picture image into a plurality of blocks, each being of a preset small size, outputting demarcations of said small-sized blocks, extracting and outputting a characteristic parameter in at least one of said small-sized blocks, and for deciding, in at least one of said small-sized blocks, on whether or not the processing for restoring a moving picture is to be carried out, using said characteristic parameter;
an interpolator for receiving a characteristic parameter from said decoding unit, receiving the result of decision in said division-into-small-block/decision unit and the information on the division into small-sized blocks, and carrying out interpolation along the time axis, using at least one of the temporally past characteristic parameter and the temporally future characteristic parameter; and
a moving picture reconstruction unit for receiving a characteristic parameter, obtained on interpolation by said interpolator, receiving the results of decision and the information on division into small-sized blocks, receiving a temporally past picture or a temporally future picture from said frame memory, reproducing a moving picture frame, with the use of said characteristic parameter, and for outputting a reproduced moving picture frame.

17. The moving picture reproducing apparatus according to any one of claims 9 to 16, wherein said characteristic parameter is a motion vector; and wherein
said moving picture reconstruction unit performs, as inter-frame prediction, the motion compensation/inter-frame prediction, employing the motion vector, for reproducing a moving picture frame.

18. A moving picture reproducing method comprising:
a step of a decoder unit receiving a bitstream, obtained on compressing/encoding a moving picture, and restoring a picture image from said bitstream;
a step of a characteristic parameter extraction unit extracting a characteristic parameter from the picture image restored in said decoder unit; and
a step of a picture reconstruction unit carrying out preset processing, with the use of a temporally past characteristic parameter and/or a temporally future characteristic parameter, for restoring a picture image which has not been received.

19. A moving picture reproducing method comprising:
a step of a decoder unit receiving a bitstream, obtained on compressing/encoding a moving picture, decoding at least one characteristic parameter from said bitstream, outputting the characteristic parameter decoded, and restoring a picture image using said characteristic parameter decoded; and
a step of a picture reconstruction unit carrying out preset processing, using a temporally past characteristic parameter and/or a temporally future characteristic parameter, for restoring a picture image which has not been received.

20. A moving picture reproducing method comprising:
a step of a decoder unit receiving a bitstream, obtained on compressing/encoding a moving picture, and restoring a picture image from said bitstream; and
a step of a picture reconstruction unit dividing the picture image into a plurality of blocks, each being of a preset small size, extracting a characteristic parameter from said picture image restored, in at least one of said blocks, deciding on whether or not preset processing is to be carried out, with the use of a temporally past characteristic parameter and/or a temporally future characteristic parameter, and subsequently restoring a picture image which has not been received.

21. A moving picture reproducing method comprising:
a step of a decoder unit receiving a bitstream, obtained on compressing/encoding a moving picture, decoding at least one characteristic parameter from said bitstream, outputting the so decoded characteristic parameter, and restoring a picture image, using the restored characteristic parameter; and
a step of a picture reconstruction unit dividing the picture image into a plurality of blocks, each being of a preset small size, deciding whether or not preset processing is to be carried out, in at least one of said small-sized blocks, with the use of a temporally past characteristic parameter and/or a temporally future characteristic parameter, and subsequently restoring a picture image which has not been received.

22. A moving picture reproducing method comprising:
a step of a decoder receiving a bitstream, obtained on compressing/encoding a moving picture, and restoring a picture image from said bitstream;
a step of a characteristic parameter extraction unit extracting a characteristic parameter from said restored picture image; and
a step of a picture reconstruction unit carrying out interpolation, along the time axis, using at least one of a temporally past characteristic parameter and a temporally future characteristic parameter, for subsequently restoring a picture image which has not been received.

23. A moving picture reproducing method comprising:
a step of a decoder unit receiving a bitstream, obtained on compressing/encoding a moving picture, decoding at least one characteristic parameter from said bitstream, outputting the so decoded characteristic parameter, and restoring a picture image, using said characteristic parameter decoded; and
a step of a picture reconstruction unit carrying out interpolation along the time axis, using at least one of a temporally past characteristic parameter and a temporally future characteristic parameter, for subsequently restoring a picture image which has not been received.

24. A moving picture reproducing method comprising:
a step of a decoder unit receiving a bitstream, obtained on compressing/encoding a moving picture, and restoring a picture image from said bitstream; and
a step of a picture reconstruction unit dividing the picture image into a plurality of blocks, each being of a preset small size, extracting a characteristic parameter from said picture image restored, in at least one of said blocks, deciding on whether or not interpolation along the time axis is to be carried out, with the use of at least one of a temporally past characteristic parameter and a temporally future characteristic parameter, and subsequently restoring a picture image which has not been received.

25. A moving picture reproducing method comprising:
a step of a decoder unit receiving a bitstream, obtained on compressing/encoding a moving picture, decoding at least one characteristic parameter from said bitstream, outputting the so decoded characteristic parameter, and restoring a picture image, using the characteristic parameter decoded; and
a step of a picture reconstruction unit dividing the picture image into a plurality of blocks, each being of a preset small size, deciding, in at least one of said small-sized blocks, whether or not interpolation along the time axis is to be carried out, with the use of at least one of a temporally past characteristic parameter and a temporally future characteristic parameter, and subsequently restoring a picture image which has not been received.

26. A program for causing a computer, constituting an apparatus for receiving a bitstream, obtained on compressing/encoding a moving picture, and for reproducing the moving picture, to execute
the processing of restoring a picture image from said compressed/encoded bitstream;
the processing of extracting a characteristic parameter from the image restored; and
the processing of carrying out preset processing, using a temporally past characteristic parameter and/or a temporally future characteristic parameter, for restoring a picture image which has not been received.

27. A program for causing a computer, constituting an apparatus for receiving a bitstream, obtained on compressing/encoding a moving picture, and for reproducing the moving picture, to execute
the processing of decoding at least one characteristic parameter from said compressed/encoded bitstream, outputting the characteristic parameter decoded and restoring a picture image using the characteristic parameter decoded; and
the processing of carrying out preset processing, with the use of a temporally past characteristic parameter and/or a temporally future characteristic parameter, for restoring a picture image which has not been received.

28. A program for causing a computer, constituting an apparatus for receiving a bitstream, obtained on compressing/encoding a moving picture, and for reproducing the moving picture, to execute
the processing of restoring a picture image from the compressed/encoded bitstream; and
the processing of dividing said picture image into a plurality of blocks, each being of a preset small size, extracting a characteristic parameter from the picture image restored, deciding, with the use of a temporally past characteristic parameter and/or a temporally future characteristic parameter, on whether or not preset processing is to be carried out, and restoring a picture image which has not been received.

29. A program for causing a computer, constituting an apparatus for receiving a bitstream, obtained on compressing/encoding a moving picture, and for reproducing the moving picture, to execute
the processing of decoding at least one characteristic parameter from said compressed/encoded bitstream, outputting the characteristic parameter decoded, and restoring a picture image, using the characteristic parameter decoded; and
the processing of dividing a picture image into a plurality of blocks, each being of a preset small size, deciding, in at least one of said preset small-sized blocks, on whether or not preset processing is to be carried out, with the use of a temporally past characteristic parameter and/or a temporally future characteristic parameter, and restoring a picture image which has not been received.

30. A program for causing a computer, constituting an apparatus for receiving a bitstream, obtained on compressing/encoding a moving picture, and for reproducing the moving picture, to execute
the processing of restoring a picture image from said compressed/encoded bitstream;
the processing of extracting a characteristic parameter from the picture image restored; and
the processing of carrying out interpolation, along the time axis, using at least one of a temporally past characteristic parameter and a temporally future characteristic parameter, for restoring a picture image which has not been received.

31. A program for causing a computer, constituting an apparatus for receiving a bitstream, obtained on compressing/encoding a moving picture, and for reproducing the moving picture, to execute
the processing of decoding at least one characteristic parameter from said compressed/encoded bitstream, outputting the characteristic parameter decoded, and restoring a picture image, using the characteristic parameter decoded; and
the processing of carrying out interpolation along the time axis, using at least one of a temporally past characteristic parameter and a temporally future characteristic parameter, for restoring a picture image which has not been received.

32. A program for causing a computer, constituting an apparatus for receiving a bitstream, obtained on compressing/encoding a moving picture, and for reproducing the moving picture, to execute
the processing of restoring a picture image from said compressed/encoded characteristic parameter; and
the processing of dividing a picture image into a plurality of blocks, each being of a preset small size, extracting a characteristic parameter from the image restored, in at least one small-sized block, deciding on whether or not interpolation on the time axis is to be carried out, with the use of a temporally past characteristic parameter and/or a temporally future characteristic parameter, and restoring a picture image which has not been received.

33. A program for causing a computer, constituting an apparatus for receiving a bitstream, obtained on compressing/encoding a moving picture, and for reproducing the moving picture, to execute
the processing of decoding at least one characteristic parameter from said compressed/encoded bitstream, outputting the characteristic parameter decoded, and restoring a picture image, using said characteristic parameter decoded; and
the processing of a picture reconstruction unit dividing a picture image into a plurality of blocks, each being of a preset small size, deciding, in at least one small-sized block, whether or not interpolation on the time axis is to be carried out, with the use of a temporally past characteristic parameter and/or a temporally future characteristic parameter, and restoring a picture image which has not been received.

34. A picture reproducing apparatus comprising:
means for receiving the information on a compressed/encoded picture to restore a picture image; and
means for extracting a preset characteristic parameter from said picture image decoded or in the process of decoding, and for restoring, from said characteristic parameter extracted and from said picture image restored, a picture image different from said picture image restored.

35. A method for reproducing a picture image by a picture reproducing apparatus, said method comprising:
a step of receiving the information on a compressed/encoded picture to restore a picture image;
a step of extracting a preset characteristic parameter from said picture image decoded or in the process of decoding; and a step of restoring, from said characteristic parameter extracted and from said picture image restored, a picture image different from said picture image restored.

36. A program for causing a computer, constituting an apparatus for receiving the information on a compressed/encoded picture and for reproducing the information, to execute
the processing of receiving the information on a compressed/encoded picture to restore a picture image;
the processing of extracting a preset characteristic parameter from said picture image restored or in the process of decoding; and the processing of restoring, from said characteristic parameter and from said picture image restored, a picture image different from said picture image restored.
